(19) Europäisches Patentamt / European Patent Office / Office européen des brevets

(11) **EP 1 872 466 B1**

(12) **EUROPÄISCHE PATENTSCHRIFT**

(45) Veröffentlichungstag und Bekanntmachung des Hinweises auf die Patenterteilung:
**29.07.2009 Patentblatt 2009/31**

(21) Anmeldenummer: 06722801.5

(22) Anmeldetag: **19.04.2006**

(51) Int Cl.:
*H02K 23/66* (2006.01)     *G01P 3/44* (2006.01)

(86) Internationale Anmeldenummer:
**PCT/DE2006/000682**

(87) Internationale Veröffentlichungsnummer:
**WO 2006/111144 (26.10.2006 Gazette 2006/43)**

(54) **VERFAHREN ZUR SENSORLOSEN POSITIONSERFASSUNG EINES ROTORS EINES ELEKTROMOTORS**

METHOD FOR DETERMINING THE POSITION OF A ROTOR OF AN ELECTRIC MOTOR WITHOUT SENSORS

PROCEDE DE DETERMINATION DE POSITION SANS CAPTEUR DU ROTOR D'UN MOTEUR ELECTRIQUE

(84) Benannte Vertragsstaaten:
**DE ES FR IT**

(30) Priorität: **20.04.2005 DE 102005018526**

(43) Veröffentlichungstag der Anmeldung:
**02.01.2008 Patentblatt 2008/01**

(73) Patentinhaber: **Conti Temic microelectronic GmbH
90411 Nürnberg (DE)**

(72) Erfinder:
• **KNEZEVIC, Jovan
85057 Ingolstadt (DE)**
• **SCHULTER, Wolfgang
88709 Meersburg (DE)**
• **ETZLSTORFER, Gernot
D-85051 Ingolstadt (DE)**
• **LIEPOLD, Erich
85092 Kösching (DE)**

(56) Entgegenhaltungen:
**EP-A- 1 043 590     US-A- 3 818 343**

• **CONSOLI A ET AL: "Sensorless position control of DC actuators for automotive applications" INDUSTRY APPLICATIONS CONFERENCE, 2004. 39TH IAS ANNUAL MEETING. CONFERENCE RECORD OF THE 2004 IEEE SEATTLE, WA, USA 3-7 OCT. 2004, PISCATAWAY, NJ, USA,IEEE, Bd. 2, 3. Oktober 2004 (2004-10-03), Seiten 1217-1224, XP010735160 ISBN: 0-7803-8486-5**

## Beschreibung

Die Erfindung betrifft ein Verfahren zur sensorlosen Ermittelung der Position eines Rotors eines mechanisch kommutierten Gleichstrommotors, sowie ein Verfahren zur sensorlosen Ermittelung der Drehzahl und/oder des Drehwinkels eines mechanisch kommutierten Gleichstrommotors.

US 3818343 offenbart ein Verfahren zur sonsonlosen Ermitlung der Paritien einer Rotors.

Aus EP 0 689 054 A1, EP 0 730 156 A1 und DE 39 35 585 A1 sind Verfahren zum Ermitteln der Drehzahl und/oder der Wegstrecke bei mechanisch kommutierten Gleichstrommotoren bekannt.

Es ist außerdem allgemein bekannt, den Wechselanteil des Stromes, die Welligkeit oder gemäß dem englischen Begriff Ripple genannt, von Gleichstrommotoren als Maß für die Drehzahl des Motors zu erfassen, auszuwerten und auszunutzen.

So wird beispielsweise in DE 35 27 906 A1 ein so genanntes Nulldurchgangsverfahren beschrieben, bei dem nach Elimination des Gleichanteils die Nulldurchgänge des Stromes erfasst werden.

Auch in der DE 4217265 wird die Welligkeit des Ankerstromsignals ausgewertet, indem dort die relativen Maxima und Minimalwerte bestimmt werden.

Weiterhin ist es bekannt das Verhalten von Gleichstrommotoren mittels eines elektromechanischen Motorzustandsmodells basierend auf den Motorengleichungen zu beschreiben. Die Motorengleichung $U_q(t) = c \cdot F \cdot n(t)$, auch Generatorgleichung genannt, die Motorengleichung $M_m(t) = c_1 F \cdot I_a(t)$ sowie der elektrische Zusammenhang $U_q(t) = U_M(t) - I_a(t) \cdot R_a - L \cdot$ sind ebenfalls bekannt.

Die Bezeichnungen in den o.g. Gleichungen bedeuten im Einzelnen:

- $U_q$      die induzierte Ankerspannung;
- $c, c_1, c_2$      die motorspezifischen Größen, auch Motorenkonstanten genannt,
- $F$      der magnetische Fluss,
- $n$      die Drehzahl,
- $M_L$      das Lastmoment,
- $M_m$      das Motormoment und
- $M_B$      das sich daraus ergebende Beschleunigungsmoment,
- $I_a$      den Motor- bzw. Ankerstrom,
- $U_M$      die Motorklemmenspannung,
- $R_a$      den Ankerwiderstand,
- $R_k$      den äußeren Klemmenwiderstand,
- $L$      die Induktivität der Motorwicklung und
- $J$      das Masse-Trägheitsmoment der gesamten rotierenden Anordnung einschließlich der zu bewegenden Teile.

Aus EP 0 689 054 A1 ist ein Verfahren und eine Einrichtung zur Drehzahlmessung und zur Erfassung und Signalaufbereitung des Kommutierungsstroms eines Gleichstrommotors bekannt. Das Verfahren sieht eine Gleichstromankopplung des Motors über einen Meßwiderstand im Motorstromkreis vor. Über einen Verstärker wird das erfasste Signal verstärkt und mittels eines Siebglieds und eines zweiten Verstärkers weiter aufbereitet. Das gewonnene Signal der Stromwelligkeit wird über einen Phasenschieber phasenverschoben und zu dem nicht phasenverschobenen Signal in einem Analogaddierer zusammengeführt. Das so entstandene Ausgangssignal ist das Stromwelligkeitssignal, welches hinsichtlich seiner Frequenz drehzahlrelevant ausgeschlossen wird.

Dem Aufsatz "Unkonventionelle Drehzahlmessung und -regelung bei Gleichstrommotoren" von Birk, Elektronik 25, 14.12.1984, S. 71 f. ist die inkrementale Bestimmung der Drehzahl aus der Kommutierungswelligkeit des Ankerstroms ebenfalls zu entnehmen.

Aus den oben genannten Schriften sind auch die grundsätzlichen Probleme bei der Erkennung und Auswertung der Stromwelligkeit zu entnehmen, insbesondere die Anfälligkeit gegen Störungen in der Netzspannung und Doppelkommutierungen. Besonders beim Einsatz dieser Verfahren in Kraftfahrzeugen erschweren Bordnetzspannungsschwankungen die Genauigkeit der Auswertung. Der zum Ausgleich derartiger Störungen notwendige schaltungstechnische Aufwand ist bei allen Kompensationsverfahren erheblich, Störungen können aber letztlich nicht geschlossen werden.

So ist aus DE 197 29 238 A1 ein Verfahren zum Ermitteln der Drehzahl und/oder des Drehwinkels bei mechanisch kommutierten Gleichstrommotoren bekannt. Hierbei wird aus dem Zeitverlauf der bei der Kommutierung auftretenden Welligkeit des Motorstroms dessen Messung durch ein parallel dazu arbeitendes Motorzustandsmodell ergänzt und kontrolliert. Dem Motorzustandsmodell liegen die elektromechanischen Motorengleichungen zu Grunde. Aus dem Motorstrom und der Motorspannung wird ein wahrscheinlicher Wert der aktuellen Drehzahl extrapoliert sowie ein zulässiger Soll-Wertebereich der nächsten Kommutierung bestimmt. Kann im Soll-Wertebereich kein Kommutierungszeitpunkt bestimmt werden, wird der extrapolierte Wert verwendet. Anderenfalls wird aus dem im Soll-Wertebereich erfassten Kommutierungszeitpunkt die aktuelle Drehzahl möglichst genau bestimmt. Die für das Motorzustandsmodell erforderliche motorspezifische und lastabhängige Größe kann fest vorgegeben oder nach der Detektion von Kommutierungsvorgängen jeweils an die aktuelle Drehzahl angepasst werden.

Aufgabe der Erfindung ist es, ein Verfahren zur möglichst exakten Bestimmung der Position eines Rotors eines mechanisch kommutierten Gleichstrommotors, sowie ein Verfahren zur sensorlosen Ermittelung der Drehzahl und/oder des Drehwinkels eines mechanisch kommutierten Gleichstrommotors aufzuzeigen welches den Aufwand der Kompensation von Einflüssen der Netzspannung reduziert und die Störsicherheit verbessert.

Die Aufgabe ist durch die Merkmale des Patentanspruchs 1 sowie des Patentanspruchs 2 gelöst. Vorteilhafte Weiterbildungen der Erfindung sind aus den jeweiligen abhängigen Unteransprüchen der Beschreibung und den Figuren zu entnehmen.

Grundgedanke ist es, bei der möglichst exakten Bestimmung der Position eines Rotors eines mechanisch kommutierten Gleichstrommotors, bzw. bei der sensorlosen Ermittelung der Drehzahl und/oder des Drehwinkels eines mechanisch kommutierten Gleichstrommotors nicht die Welligkeit des Motorstromes des Elektromotors zur Bestimmung heranzuziehen, sondern auf den Innenwiderstand des Elektromotors, insbesondere den Ankerwiderstand bzw. den entsprechenden Leitwert, abzustellen und diesen zur Analyse zu verwenden. Anhand der Welligkeit (Ripple) des Ankerwiderstandes bzw. Ankerleitwerts des Elektromotors wird die Position des Rotors des mechanisch kommutierten Elektromotors bzw. des Drehwinkels und der Drehzahl des mechanisch kommutierten Elektromotors ermittelt.

Hierzu wird sowohl die Ankerspannung als auch der Ankerstrom des mechanisch kommutierten Gleichstrom-Elektromotors ermittelt.

Dieses Vorgehen stellt eine komplette Abwendung der bisherigen Vorgehensweise dar, da bisher in Fachkreisen die Ansicht vertreten wurde, dass ein Ermittlung der Drehzahl und des Drehwinkels, und damit der aktuellen Position eines über den Elektromotor beweglichen Elementes, anhand der Analyse des Ankerwiderstandes, nicht möglich sei. Es wurde bisher stets die Analyse der Welligkeit des Motorstroms herangezogen.

Zur Ermittlung der Drehzahl und /oder des Drehwinkels eines Elektromotors wird dabei der aktuelle Wert des Ankerwiderstandes bzw. Ankerleitwertes des Elektromotors zeitlich kontinuierlich ermittelt und daraus der Mittelwert bestimmt. Der Mittelwert wird vorzugsweise über mehrere Kommutierungsfälle hinweg oder sogar über mehrere Umdrehungen des Motors oder kontinuierlich ermittelt.
Der aktuelle Wert des Ankerwiderstandes bzw. Ankerleitwertes wird mit dem entsprechenden Mittelwert verglichen, also der aktuelle Wert des Ankerwiderstandes mit dem Mittelwert des Ankerwiderstandes und der aktuelle Wert des Ankerleitwertes mit dem Mittelwert des Ankerleitwertes.
Anhand der durch diesen Vergleich erkennbaren Änderung des Ankerwiderstandes bzw. Ankerleitwertes des Elektromotors bezüglich dem Mittelwert wird die Drehzahl und/oder der Drehwinkel des Elektromotors ermittelt.
Die Drehzahl und/oder der Drehwinkel des Elektromotors werden vorzugsweise abgeleitet, indem

c1) die Anzahl der Übereinstimmungen des aktuellen Werts mit dem Mittelwert erfasst werden oder
c2) der aktuelle Wert des Ankerwiderstandes bzw. Ankerleitwertes mit dem Mittelwert in einem Vergleicher verglichen werden, wobei das Vergleichssignal das vorzeichenbehaftete Vergleichsergebnis darstellt und die Anzahl der Nulldurchgänge erfasst werden oder
c3) der aktuelle Wert des Ankerwiderstandes bzw. Ankerleitwertes mit dem Mittelwert voneinander subtrahiert werden und die Anzahl der Nulldurchgänge im Subtraktionssignal erfasst werden

Die in den Schritten c1), c2) oder c3) ermittelten Anzahl entspricht jeweils der Anzahl der in diesem Zeitraum erfolgten Kommutierungen, woraus wiederum auf die Drehzahl und/oder der Drehwinkel des Elektromotors geschlossen wird. Die Schritte c1 bis c3 stellen also Alternativen dar.

Die für das vorzugsweise verwendete Motorzustandsmodell erforderlichen Größen und Parameter werden entweder fest vorgegeben oder aber aus dem Betrieb des mechanisch kommutierten Gleichstrom-Elektromotors abgeleitet und entsprechend angepasst.

Das Elektromotor-Zustandsmodell des mechanisch kommutierten Gleichstrom-Elektromotors geht von nachfolgender Zustandsgleichung aus:

$$u = R * i + L * \frac{di}{dt} + E$$

Die Impedanz des mechanisch kommutierten Gleichstrom-Elektromotors kann bereits im Anlaufzeitpunkt noch vor dem Überwinden der Haftreibung bestimmt werden, da in diesem Fall die Drehzahl noch Null und keine induzierte Ankerspannung vorhanden ist. Durch mehrfache Erfassung von Motorstrom und Motorspannung kann der Wert der Motorimpedanz adaptiv angepasst und Fehler so weitgehend ausgeschlossen werden. Außerdem kann die temperatur-und lastabhängige motorspezifische Größe nach jedem Kommutierungsvorgang neu bestimmt und so für die folgende Extrapolation der Einfluss von Temperatur und Last berücksichtigt werden. Sollte die Arbeitsdauer des Motors relativ kurz sein, so kann die motorspezifische Größe auch über die gesamte Arbeitsdauer auf dem fest vorgegebenen Wert bleiben, da insbesondere die thermische Beeinflussung demgegenüber sehr viel langsamer und schwächer abläuft.

Das Verfahren zur sensorlosen Positionserfassung beruht auf der Ermittlung des Ankerwiderstandes bzw. des dazu reziproken Leitwertes, welcher durch die Innenwicklungen des Rotors vorhanden ist. Zur Ermittlung des Ankerwiderstandes werden die Stromaufnahme und die Spannung am mechanisch kommutierten Gleichstrom-Elektromotor gemessen. Hierbei ist von Bedeutung, dass bei der weiteren Bearbeitung und insbesondere durch die erfindungsgemäße Vorgehensweise die Schwankungen des Bordnetzes kaum Einfluss auf die Ergebnisse des erfindungsgemäßen Verfahrens nehmen und weitgehend kompensiert werden.

Anhand des Motorstromes und der Motorspannung und weiterer Parameter, wie der Motorinduktivität und/oder der Flux-Konstante des Elektromotors wird auf den zeitlichen Verlauf des Ankerwiderstandes des Elektromotors geschlossen.

Das weitere Verfahren wird nunmehr zu Erläuterung und besseren Verständlichkeit anhand von Figuren näher erläutert. Es wird im Weiteren auf einen mechanisch kommutierten Gleichstrom-Elektromotor Bezug genommen, anhand dessen die Erfindung näher erläutert wird.

Es zeigt:

Fig. 1    eine schematische Darstellung eines mechanisch kommutierten Gleichstrom-Elektromotor Elektromotors und dessen schematisches Zustandsbildes des Ankerwiderstandes;

Fig. 2    den zeitlichen Verlauf des Ankerwiderstandes eines mechanisch kommutierten Gleichstrom-Elektromotor Elektromotors mit konstanter Drehzahl;

Fig. 3    eine Darstellung der Spannung, des Stromes und des Ankerwiderstandes;

Fig. 4    eine Darstellung des Ausgangssignals eines Vergleichers welchem als Eingangssignal der aktuell ermittelte Ankerwiderstand und als Vergleichssignal der Mittelwert der zeitlich nacheinander ermittelten Ankerwiderstände vorliegt;

Fig. 5    grafische Darstellung eines Look-Up Table zur Bestimmung der Position des Rotors;

Fig. 6    zeigt eine Darstellung der Werte des Ankerwidersandes eines mechanisch kommutierten Gleichstrom-Elektromotors über die Zeit bei mehreren Umdrehungen des mechanisch kommutierten Gleichstrom-Elektromotors;

Fig. 7    zeigt einen vergrößerten Ausschnitt aus Fig. 6;

Fig. 8    zeigt schematisch die Auswertung anhand eines Look-Up Tables;

Fig. 9    eine Darstellung des Drehwinkels des mechanisch kommutierten Gleichstrom-Elektromotors über die Zeit anhand des Look-Up Tables aus Fig. 8.

Da der zeitliche Verlauf des Ankerwiderstandes bzw. Leitwertes des mechanisch kommutierten Gleichstrom-Elektromotors abhängig ist von der Position des Rotors des Elektromotors und der mechanischen Kommutierungselemente (Bürsten), ergibt sich kein kontinuierlicher Verlauf des Ankerwiderstandes. Vielmehr verändert sich dieser bei einem Umlauf des Rotors, und somit auch innerhalb einer Umdrehung über die Zeit.

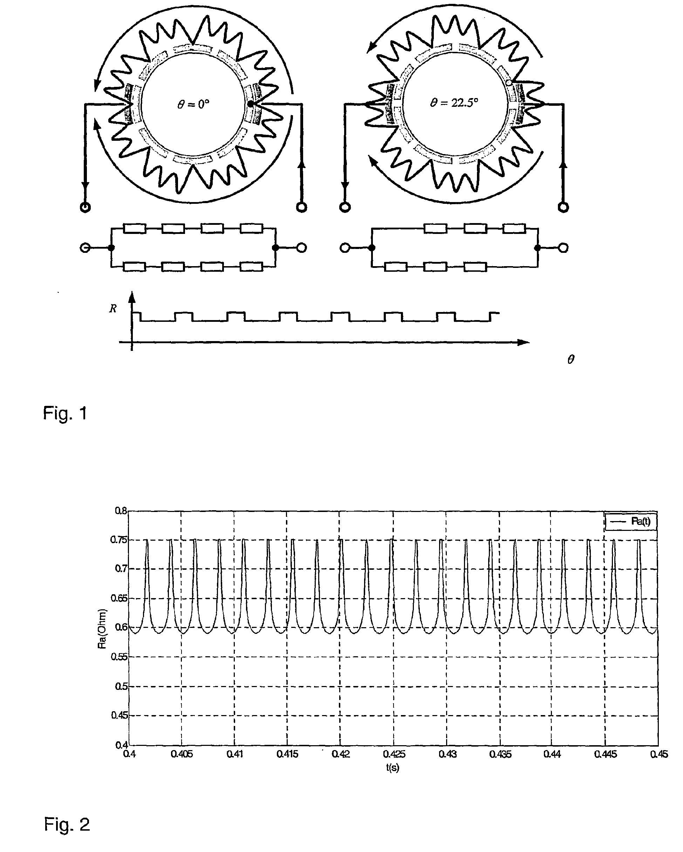

Anhand von Fig. 1 ist schematisch ein mechanisch kommutierter Gleichstrom-Elektromotor dargestellt, links mit einem Drehwinkel θ von 0°, und rechts mit einem θ von 22,5°. Unterhalb des mechanisch kommutierten Gleichstrom-Elektromotors ist eine schematische Darstellung des zugehörigen Ankerwiderstandes des mechanisch kommutierten Gleichstrom-Elektromotors dargestellt, in Abhängigkeit des Drehwinkels des Rotors des mechanisch kommutierten Gleichstrom-Elektromotors dargestellt. Unterhalb dieser Darstellung ist der schematische Verlauf ideeller der Ankerwiderstandes über den Drehwinkel θ des Rotors dargestellt.

Der Ankerwiderstand ist bei laufendem Rotor als eine nicht lineare Größe über die Zeit darstellbar, was beispielhaft aus Fig. 2 zu entnehmen ist.

Es zeigt sich, dass der Ankerwiderstand sich nicht linear über die Zeit ändert, sondern dass er sich vielmehr in Abhängigkeit der jeweiligen Stellung des Rotors des mechanisch kommutierten Gleichstrom-Elektromotors ändert. Auf Grund dieser Nichtlinearität des Ankerwiderstandes ergeben sich zwangsläufig Welligkeiten (im Englischen mit Ripples bezeichnet) im Ankerwiderstand über die Zeit. Es ergibt sich somit, dass der Ankerwiderstand eine Funktion des Drehwinkels des Rotors und somit auch der Zeit, bezogen auf eine Umdrehung des Rotors um 360° Grad ist.

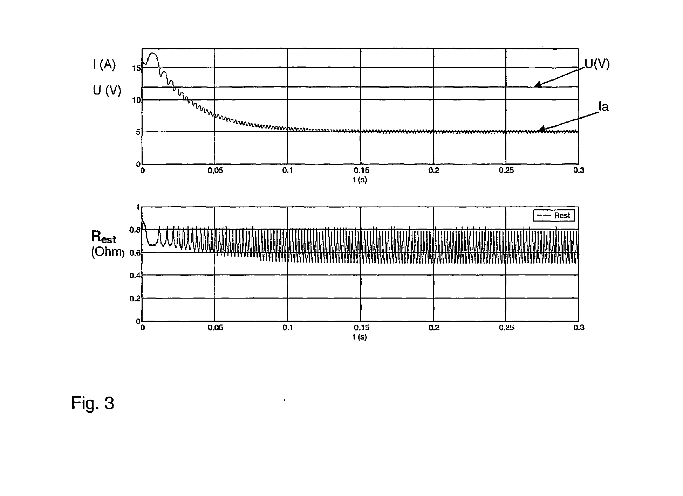

Sind die Motorinduktivität, der Flux-Konstante des mechanisch kommutierten Gleichstrom-Elektromotors und die weiteren Parameter bekannt, insbesondere der aktuelle Motorstrom und die aktuell am mechanisch kommutierten Gleichstrom-Elektromotor anliegende Spannung, so kann der Ankerwiderstand errechnet werden. Das Ergebnis einer solchen Berechnung ist beispielhaft in Fig. 3 dargestellt, wobei der Motorstrom in Fig. 3 als ideell konstant angenommen ist. In Fig. 3 ist die am Elektromotor anliegende Spannung, sowie der aufgenommene Strom, dargestellt, aufgetragen über die Zeit, darunter ist der errechnete Ankerwiderstand dargestellt, ebenfalls aufgetragen über die Zeit.

Wie man deutlich erkennt, ist die Welligkeit des Ankerwiderstandes stärker ausgeprägt als die Welligkeit der am mechanisch kommutierten Gleichstrom-Elektromotor anliegenden Spannung. Außerdem werden Schwankungen im Bordnetz faktisch durch die Errechnung des Ankerwiderstandes unterdrückt.

Die Betrachtung der Welligkeit des Ankerwiderstandes liefert ein qualitativ besseres Ergebnis insbesondere zur späteren Signalauswertung gegenüber der Betrachtung der Welligkeit des Stromes.

Wird der Ankerwiderstand des Elektromotors als Signal identifiziert, ist dieser nicht mehr von der Spannung abhängig, da der Ankerwiderstand bzw. dessen Änderung nur vom Drehwinkel des Rotors abhängig ist. Daher haben dann Änderungen der Spannung z.B. durch "Bordspitzen" keinen Einfluss auf die Signalauswertung. Analoges gilt für den zum Ankerwiderstand ja reziproken Ankerleitwert.

Um nunmehr aus dem Ankerwiderstand die Position des Rotors des mechanisch kommutierten Gleichstrom-Elektromotor abzuleiten, sowie auch der Drehzahl und des Drehwinkels des mechanisch kommutierten Gleichstrom-Elektromotors, wird der zeitlich aktuelle Wert des Ankerwiderstandes mit dem Mittelwert des Ankerwiderstandes, der sich als Mittelwert aus der Summe der zeitlichen Werte des Ankerwiderstandes ergibt, verglichen.

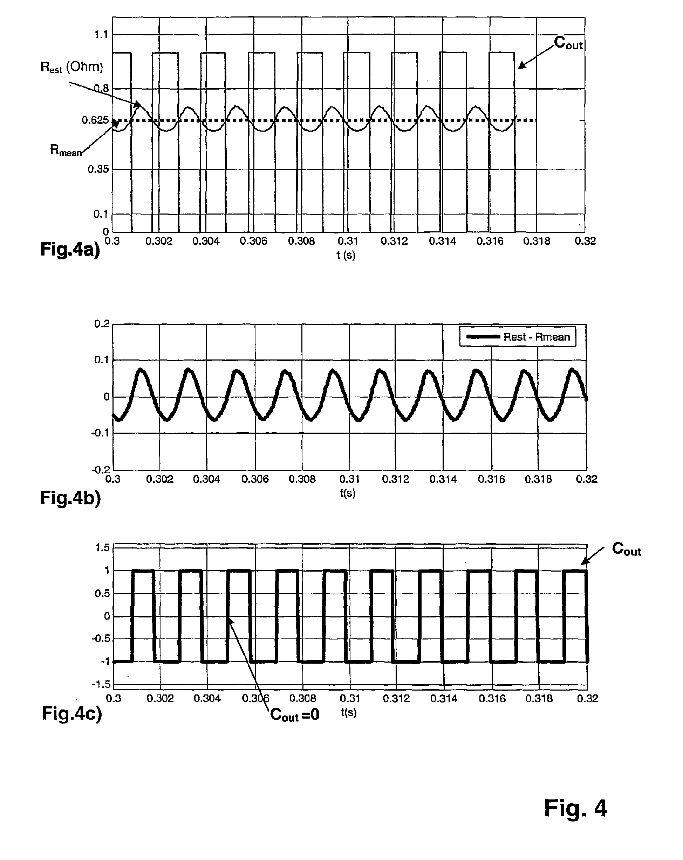

Dieser Vergleich wird in einer vorteilhaften Ausgestaltung der Erfindung durch einen Komparator vorgenommen, der die zeitlich eingehenden Werte des Ankerwiderstandes mit dem Mittelwert des Ankerwiderstandes vergleicht. Das Ergebnis dieses Vergleiches, d.h. das Ausgangssignal des Komparators ist in Fig. 4 dargestellt.

In Figur 4 a) ist dabei gut zu erkennen, dass der Ankerwiderstand und damit auch der Leitwert über die Umdrehungen hinweg einen weitgehend periodischen Verlauf in Form einer Schwingung um einen weitgehend konstanten Mittelwert aufweisen. Mag der Mittelwert sich unter sich ändernden Umgebungsbedingungen ändern, so sind diese Änderungen jedoch zumindest im Verhältnis zur Dauer einer Umdrehung oder erst recht eines Kommutierungsvorgangs vernachlässigbar. Zur Bewertung dieser periodischen Änderungen im Ankerwiderstand bzw. Ankerleitwert dient bevorzugt der Mittelwert als Bezugsgröße, wobei alternativ auch eine andere mathematische Bewertung, bspw. eine Maxima-Minima-Bewertung oder dergleichen denkbar sind.

Anhand des Mittelwertes kann aber beispielsweise ein Vergleich beider Größen erfolgen und die Anzahl der Übereinstimmungen des aktuellen Werts ($R_{est}(t)$) mit dem Mittelwert ($R_{mean}$) erfasst werden. Dazu kann man bspw. einen Vergleicher verwenden, wobei ein Vergleichssignal ($C_{out}$) das vorzeichenbehaftete Ergebnis des Vergleichs darstellt und die Anzahl der Nulldurchgänge ($C_{out}=0$) (Vgl. auch Fig. 4c) erfasst wird.

Im Prinzip äquivalent dazu ist, den aktuellen Wert des Ankerwiderstandes ($R_{est}(t)$) bzw. Ankerleitwertes mit dem Mittelwert voneinander zu subtrahieren ($R_{es}t(t) - R_{mean}$), wie dies in Fig. 4b) dargestellt ist und die Anzahl der Nulldurchgänge ($0=R_{est}(t) - R_{mean}$) im Subtraktionssignal zu erfassen

Die Drehzahl und/oder der Drehwinkel des Elektromotors werden vorzugsweise abgeleitet, indem

c1) die Anzahl der Übereinstimmungen des aktuellen Werts ($R_{est}(t)$) mit dem Mittelwert ($R_{mean}$) erfasst werden oder

c2) der aktuelle Wert ($R_{est}(t)$) des Ankerwiderstandes bzw. Ankerleitwertes mit dem Mittelwert ($R_{mean}$) in einem Vergleicher verglichen werden, wobei ein Vergleichssignal ($C_{out}$) das vorzeichenbehaftete Ergebnis des Vergleichs darstellt und die Anzahl der Nulldurchgänge ($C_{out}=0$) erfasst werden oder

c3) der aktuelle Wert des Ankerwiderstandes ($R_{est}(t)$) bzw. Ankerleitwertes mit dem Mittelwert voneinander subtrahiert ($R_{est}(t) - R_{mean}$) werden und die Anzahl der Nulldurchgänge ($0=R_{est}(t) - R_{mean}$) im Subtraktionssignal erfasst werden

Die in den Schritten c1), c2) oder c3) ermittelten Anzahl entspricht jeweils der Anzahl der in diesem Zeitraum erfolgten Kommutierungen, woraus wiederum auf die Drehzahl und/oder der Drehwinkel des Elektromotors geschlossen wird. Die Schritte c1 bis c3 stellen also bevorzugte Ausgestaltungen zur Erfassung der Änderungen des aktuellen Werts des Ankerwiderstandes dar, wobei der Mittelwert als Bezugspunkt verwendet wird.

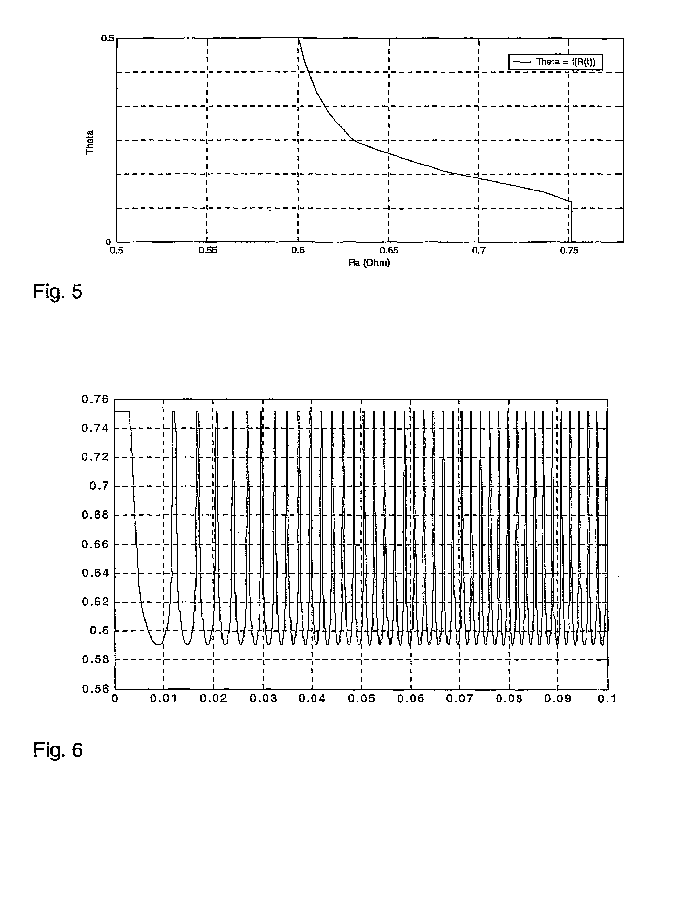

Um eine bessere Auflösung bzgl. der Position des Rotors des mechanisch kommutierten Gleichstrom-Elektromotors zu erhalten, hat es sich als besonders vorteilhaft erwiesen, die gewonnen Werte über einem Look-up Table zu verifizieren. Somit kann eine genauere Positionsbestimmung vorgenommen werden. Die dem Look-Up Table zugrundeliegende Kennlinie der Winkelposition Theta über den Ankerwiderstand ist in Fig. 5 dargestellt. Der Wert 1 Theta entspricht dabei der Umdrehung zwischen zwei Kommutierungsvorgängen (Ripples). Wie in Fig. 5 dargestellt, kann für die steigende und fallende Flanke mit guter Näherung eine gemeinsame Kennlinie verwendet werden, so dass der Look-Up-Table entsprechend weniger Speicherplatz bedarf.

Durch die Verwendung des Look-Up Tables kann somit der Drehwinkel des mechanisch kommutierten Gleichstrom-Elektromotors ermittelt werden.

Über einen nicht dargestellten Zähler, welcher die Nulldurchgänge des Ausgangs des Vergleichers (in Fig. 4 als $C_{out}$ dargestellt) mitzählt, ist die Drehzahl des mechanisch kommutierten Gleichstrom-Elektromotor auf einfache und sehr exakte Weise erfassbar.

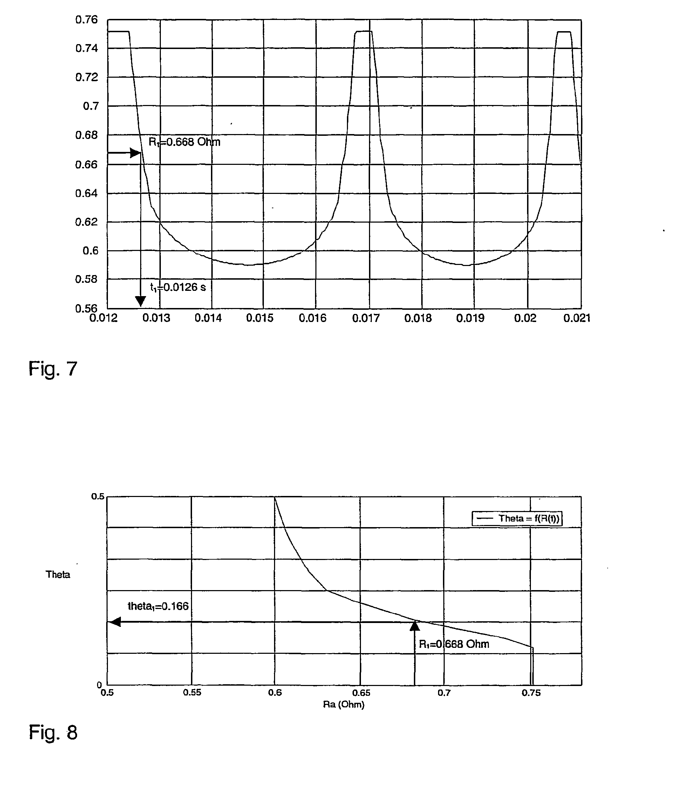

Um die Vorteile des Look-Up Table nochmals deutlicher aufzuzeigen, ist in Fig. 6 und Fig. 7 nochmals beispielhaft der Ankerwiderstand eines mechanisch kommutierten Gleichstrom-Elektromotors über die Zeit dargestellt, wobei in Fig. 7 ein vergrößerter Teilausschnitt aus Fig. 6 dargestellt ist.

Über den zeitlichen Verlauf des Ankerwiderstandes werden die Werte im Look-Up Table - siehe hierzu Fig. 8 - zudem vorzugsweise konkretisiert. Nach einiger Zeitdauer sind diese Werte sehr stabil.

Es können aber auch die dem Look-Up Table zu Grunde liegende Werte vorgegeben werden, sodass bereits werksseitig diese Vorgabewerte hinterlegt sind. Diese Werte können aber auch im Weiteren durch die ermittelten Werte im Betrieb des mechanisch kommutierten Gleichstrom-Elektromotors verändert werden, d.h. an veränderte Betriebsbedingungen angepasst werden.

Somit kann anhand der Werte des Ankerwiderstandes über den Look-Up Table eine noch exaktere Positionsbestimmung des Rotors vorgenommen werden, als dies alleine aus der Zählung der Kommutierungsvorgänge möglich ist.

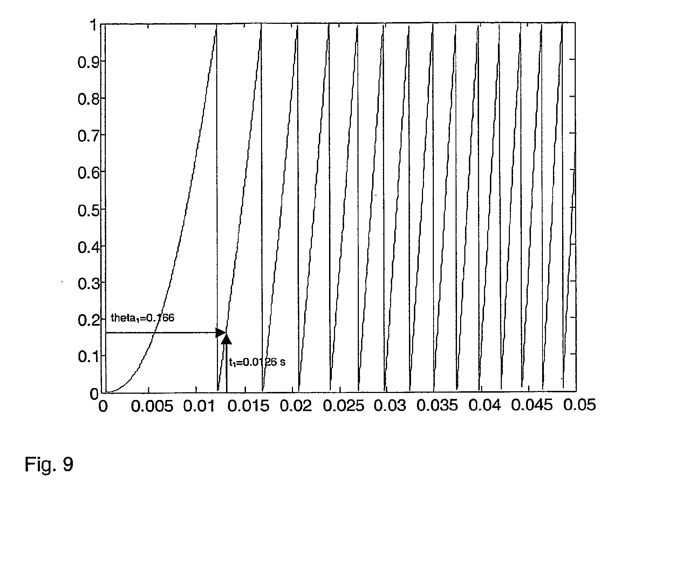

Anhand des Look-Up Tables kann dann die Funktion des Drehwinkels (Theta) als Funktion der Zeit dargestellt werden, was anhand von Fig. 9 verdeutlicht ist, und zwar nicht nur je Kommutierungsschrritt, sondern auch entsprechend der Anzahl der Werte im Look-Up-Table auch noch zwischen den einzelnen Kommutierungsschritten.

**Patentansprüche**

1. Verfahren zur Ermittlung der aktuellen Position eines Rotors, insbesondere des Drehwinkels des Rotors, eines Elektromotors, **dadurch gekennzeichnet, dass** der aktuelle Wert des Ankerwiderstandes ($R_{est}(t)$) bzw. Leitwertes des Elektromotors zeitlich (t) kontinuierlich ermittelt und die aktuelle Position (Theta/θ) des Rotors des Elektromotors anhand des aktuellen Wertes des Ankerwiderstandes ($R_{est}(t)$) bzw. Ankerleitwertes des Elektromotors ermittelt wird.

2. Verfahren zur Ermittlung der Drehzahl und /oder der Drehwinkels (Theta/θ) eines Elektromotors, **dadurch gekennzeichnet, dass**

   a) der aktuelle Wert des Ankerwiderstandes ($R_{est}(t)$) bzw. Ankerleitwertes des Elektromotors zeitlich kontinuierlich ermittelt und
   b) daraus der Mittelwert ($R_{mean}$) ermittelt und
   c) der aktuelle Wert des Ankerwiderstandes ($R_{est}(t)$) bzw. Ankerleitwertes mit dem Mittelwert ($R_{mean}$) verglichen und
   d) daraus die Drehzahl und/oder der Drehwinkel des Elektromotors anhand der Änderung des Ankerwiderstandes ($R_{est}(t)$) bzw. Ankerleitwertes des Elektromotors bezüglich dem Mittelwert ($R_{mean}$) ermittelt wird.

3. Verfahren nach Anspruch 2, **dadurch gekennzeichnet, dass**

   c1) die Anzahl der Übereinstimmungen des aktuellen Werts ($R_{est}(t)$) mit dem Mittelwert ($R_{mean}$) erfasst werden oder
   c2) der aktuelle Wert ($R_{est}(t)$) des Ankerwiderstandes bzw. Ankerleitwertes mit dem Mittelwert ($R_{mean}$) in einem Vergleicher verglichen werden, wobei ein Vergleichssignal ($C_{out}$) das vorzeichenbehaftete Ergebnis des Vergleichs darstellt und die Anzahl der Nulldurchgänge ($C_{out}=0$) erfasst werden oder
   c3) der aktuelle Wert des Ankerwiderstandes ($R_{est}(t)$) bzw. Ankerleitwertes mit dem Mittelwert voneinander subtrahiert ($R_{est}(t) - R_{mean}$) werden und die Anzahl der Nulldurchgänge ($0=R_{est}(t) - R_{mean}$) im Subtraktionssignal erfasst werden
   d) und aus der in den Schritten c1), c2) oder c3) ermittelten Anzahl die Drehzahl und/oder der Drehwinkel des Elektromotors abgeleitet wird.

4. Verfahren nach Anspruch 1 oder 2, **dadurch gekennzeichnet, dass** der Wert aktuelle Wert des Ankerwiderstandes ($R_{est}(t)$) bzw. Leitwertes anhand des vom Elektromotor aufgenommenen Stromes, der anliegenden Spannung und mindestens einem weiteren Parameter ermittelt wird.

5. Verfahren nach einem oder mehreren der vorangehenden Ansprüche, **dadurch gekennzeichnet, dass** als aufgenommener Strom der Ankerstrom und als anliegende Spannung die Ankerspannung verwendet wird.

6. Verfahren nach einem oder mehreren der vorangehenden Ansprüche, **dadurch gekennzeichnet, dass** der Elektromotor ein mechanisch kommutierter Gleichstromelektromotor ist.

7. Verfahren nach einem oder mehreren der vorangehenden Ansprüche, **dadurch gekennzeichnet, dass** die Welligkeit des Ankerwiderstandes ($R_{est}(t)$) bzw. Leitwertes zur Analyse herangezogen wird.

8. Verfahren nach einem oder mehreren der vorangehenden Ansprüche, **dadurch gekennzeichnet, dass** ein weiterer Parameter die Motorinduktivität und/oder die Flux-Konstante des Elektromotors ist.

9. Verfahren nach einem oder mehreren der vorangehenden Ansprüche, **dadurch gekennzeichnet, dass** ein Look-Up Table angelegt wird für Werte des Ankerwiderstandes ($R_{est}(t)$) bzw. Leitwertes, welche zeitlich bei einer Umdrehung des Elektromotors bzw. Rotors des Elektromotors, vorliegen.

10. Verfahren nach einem oder mehreren der vorangehenden Ansprüche, **dadurch gekennzeichnet, dass** die Werte des Look-Up Table kontinuierlich anhand der ermittelten Werte des Ankerwiderstandes ($R_{est}(t)$) bzw. Leitwertes angepasst werden.

11. Verfahren nach einem oder mehreren der vorangehenden Ansprüche, **dadurch gekennzeichnet, dass** die Werte des Look-Up Table werkseitig vorbelegt werden.

12. Verfahren nach einem oder mehreren der vorangehenden Ansprüche, **dadurch gekennzeichnet, dass** anhand der Drehzahl, des Drehwinkels und/oder der Position des Rotors des Elektromotors die Position des von dem Elektromotor bewegten Elementes bestimmt wird.

13. Verfahren nach Anspruch 12, **dadurch gekennzeichnet, dass** das vom Elektromotor bewegte Elemente ein Schiebdach, ein Fenster oder eine Türe in einem Kraftfahrzeug ist.

**Claims**

1. A method for determining the current position of a rotor, in particular the rotational angle of the rotor, of an electric motor, **characterized in that** the current value of the armature resistance ($R_{est}(t)$) or the conductance of the electric motor is determined continuously over time (t), and the current position (theta/θ) of the rotor of the electric motor is determined using the current value of the armature resistance ($R_{est}(t)$) or the armature conductance of the electric motor.

2. A method for determining the rotational speed and/or the rotational angle (theta/θ) of an electric motor, **characterized in that**

a) the current value of the armature resistance ($R_{est}(t)$) or the armature conductance of the electric motor is determined continuously over time, and
b) the mean ($R_{mean}$) of the values so obtained is determined, and
c) the current value of the armature resistance ($R_{est}(t)$) or the armature conductance is compared with the mean ($R_{mean}$), and
d) the rotational speed and/or the rotational angle of the electric motor is determined using the change of the armature resistance ($R_{est}(t)$) or the armature conductance relative to the mean ($R_{mean}$).

3. A method according to claim 2, **characterized in that**

c1) the number of cases is detected in which the current value ($R_{est}(t)$) is equal to the mean ($R_{mean}$), or
c2) the current value ($R_{est}(t)$) of the armature resistance or the armature conductance is compared with the mean ($R_{mean}$) in a comparator, wherein a comparison signal ($C_{out}$) is the result of the comparison, with positive or negative sign, and the number of zero transitions ($C_{out} = 0$) is detected, or
c3) the current value of the armature resistance ($R_{est}(t)$) or the armature conductance and the mean are subtracted from one another ($R_{est}(t) - R_{mean}$) and the number of zero transitions ($0 = R_{est}(t) - R_{mean}$) of the subtraction signal is detected,
d) and the number determined in steps c1), c2) or c3) is used to derive the rotational speed and/or the rotational angle of the electric motor.

4. A method according to claim 1 or 2, **characterized in that** the current value of the armature resistance ($R_{est}(t)$) or the conductance is determined using the current consumed by the electric motor, the voltage applied and at least one further parameter.

5. A method according to one or more of the preceding claims, **characterized in that** the armature current is used as the current consumed and the armature voltage is used as the voltage applied.

6. A method according to one or more of the preceding claims, **characterized in that** the electric motor is a direct current electric motor which is mechanically commutated.

7. A method according to one or more of the preceding claims, **characterized in that** the ripple of the armature resistance ($R_{est}(t)$) or the conductance is used for the analysis.

8. A method according to one or more of the preceding claims, **characterized in that** a further parameter is the motor inductance and/or the flux constant of the electric motor.

9. A method according to one or more of the preceding claims, **characterized in that** a look-up table is created for the values of the armature resistance ($R_{est}(t)$) or the conductance which are present over time during a revolution of the electric motor or the rotor of the electric motor.

10. A method according to one or more of the preceding claims, **characterized in that** the values of the look-up table are adjusted continuously using the values determined for the armature resistance ($R_{est}(t)$) or the conductance.

11. A method according to one or more of the preceding claims, **characterized in that** the values of the look-up table are preallocated at the factory.

12. A method according to one or more of the preceding claims, **characterized in that** the rotational speed, the rotational angle and/or the position of the rotor of the electric motor are used to determine the position of the element moved by the electric motor.

13. A method according to claim 12, **characterized in that** the element moved by the electric motor is a sliding roof, a window or a door of a motor vehicle.

**Revendications**

1. Procédé de détermination de la position actuelle d'un rotor, en particulier de l'angle de rotation du rotor, d'un moteur électrique, **caractérisé en ce que** la valeur actuelle de la résistance d'induit ($R_{est}(t)$) ou de la conductance du moteur électrique est déterminée de façon continue temporellement (t), et la position actuelle (Theta/θ) du rotor du moteur électrique est déterminée à l'aide de la valeur actuelle de la résistance d'induit ($R_{est}(t)$) ou de la conductance d'induit du moteur électrique.

**2.** Procédé de détermination de la vitesse de rotation et/ou de l'angle de rotation (Theta/θ) d'un moteur électrique, **caractérisé en ce que**

a) la valeur actuelle de la résistance d'induit ($R_{est}$(t)) ou de la conductance d'induit du moteur électrique est déterminée de façon continue temporellement et
b) la valeur moyenne ($R_{mean}$) est déterminée à partir de cela et
c) la valeur actuelle de la résistance d'induit ($R_{est}$(t)) ou de la conductance d'induit est comparée à la valeur moyenne ($R_{mean}$) et,
d) à partir de cela, la vitesse de rotation et/ou l'angle de rotation du moteur électrique est déterminé(e) à l'aide de la variation de la résistance d'induit ($R_{est}$(t)) ou de la conductance d'induit du moteur électrique par rapport à la valeur moyenne ($R_{mean}$).

**3.** Procédé selon la revendication 2, **caractérisé en ce que**

c1) le nombre de coïncidences de la valeur actuelle ($R_{est}$(t)) avec la valeur moyenne ($R_{mean}$) est détecté ou
c2) la valeur actuelle ($R_{est}$(t)) de la résistance d'induit ou de la conductance d'induit est comparée à la valeur moyenne ($R_{mean}$) dans un comparateur, un signal de comparaison ($C_{out}$) représentant le résultat de la comparaison précédé d'un signe, et le nombre de passages par zéro ($C_{out}$=0) étant détecté ou
c3) la valeur moyenne étant soustraite de la valeur actuelle de la résistance d'induit ($R_{est}$(t)) ou de la conductance d'induit, et le nombre de passages par zéro $0=(R_{est}(t) - R_{mean})$ étant détecté dans le signal de signal de soustraction
d) et la vitesse de rotation et/ou l'angle de rotation du moteur électrique étant déduit(e) du nombre déterminé dans les étapes c1), c2) ou c3).

**4.** Procédé selon la revendication 1 ou 2, **caractérisé en ce que** la valeur actuelle de la résistance d'induit ($R_{est}$(t)) ou de la conductance d'induit est déterminé à l'aide du courant absorbé par le moteur électrique, de la tension présente et d'au moins un autre paramètre.

**5.** Procédé selon une ou plusieurs des revendications précédentes, **caractérisé en ce que** le courant d'induit est utilisé en tant que courant absorbé, et la tension d'induit est utilisée en tant que tension présente.

**6.** Procédé selon une ou plusieurs des revendications précédentes, **caractérisé en ce que** le moteur électrique est un moteur électrique à courant continu à commutation mécanique.

**7.** Procédé selon une ou plusieurs des revendications précédentes, **caractérisé en ce que** l'ondulation de la résistance d'induit ($R_{est}$(t)) ou de la conductance est utilisée pour l'analyse.

**8.** Procédé selon une ou plusieurs des revendications précédentes, **caractérisé en ce qu'**un autre paramètre est l'inductance de moteur et/ou la constante de flux du moteur électrique.

**9.** Procédé selon une ou plusieurs des revendications précédentes, **caractérisé en ce qu'**une table de correspondance est mise en oeuvre pour les valeurs de la résistance d'induit ($R_{est}$(t)) ou de la conductance qui sont présentes temporellement lors d'une rotation du moteur électrique ou du rotor du moteur électrique.

**10.** Procédé selon une ou plusieurs des revendications précédentes, **caractérisé en ce que** les valeurs de la table de correspondance sont adaptées de façon continue à l'aide des valeurs déterminées de la résistance d'induit ($R_{est}$(t)) ou de la conductance.

**11.** Procédé selon une ou plusieurs des revendications précédentes, **caractérisé en ce que** les valeurs de la table de correspondance sont pré-installées en usine.

**12.** Procédé selon une ou plusieurs des revendications précédentes, **caractérisé en ce que,** à l'aide de la vitesse de rotation, de l'angle de rotation et/ou de la position du rotor du moteur électrique, la position de l'élément déplacé par le moteur électrique est déterminée.

**13.** Procédé selon la revendication 12, **caractérisé en ce que** l'élément déplacé par le moteur électrique est un toit ouvrant, une fenêtre ou une porte dans un véhicule automobile.

Fig. 1

Fig. 2

Fig. 3

Fig.4a)

Fig.4b)

Fig.4c)

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3818343 A
- EP 0689054 A1
- EP 0730156 A1
- DE 3935585 A1
- DE 3527906 A1
- DE 4217265
- DE 19729238 A1